# NEUE EUROPÄISCHE PATENTSCHRIFT

(11) **EP 2 270 319 B2**
(45) Veröffentlichungstag und Bekanntmachung des Hinweises auf die Entscheidung über den Einspruch: **20.07.2016**
(45) Hinweis auf die Patenterteilung: 18.04.2012
(21) Anmeldenummer: 09010129.6
(22) Anmeldetag: 05.08.2009
(51) Int. Cl.: F01N 3/023, F01N 3/029, B01D 41/04

(54) **Verfahren und Vorrichtung zur Reinigung von Partikelfiltern in Abgasanlage von Verbrennungsmotoren**
Method and device for cleaning particulate filters in exhaust gas systems of combustion engines
Procédé et dispositif de nettoyage de filtres à particules dans les systèmes de gaz d'échappement de moteurs à combustion interne

(30) Priorität: 19.06.2009 DE 102009025598
(43) Veröffentlichungstag der Anmeldung: 05.01.2011
(73) Patentinhaber: TUNAP Industrie Chemie GmbH & Co. Produktions KG, 82515 Wolfratshausen (DE)
(72) Erfinder: Sprügel, Friedrich, 81825 München (DE); Urban, Alfons, 83670 Bad Heilbrunn (DE)
(74) Vertreter: Ter Meer Steinmeister & Partner

(56) Entgegenhaltungen:
- EP-A- 0 623 372
- EP-A- 1 181 966
- WO-A-2004/101112
- DE-A1- 4 313 132
- DE-A1- 10 055 210
- DE-A1- 10 118 864
- DE-A1- 22 066 75A
- DE-U1- 8 316 069
- JP-A- 57 163 113
- JP-A- 2004 239 072
- US-A1- 2003 159 436

## Beschreibung

Die Erfindung betrifft ein Verfahren zur Reinigung von Partikelfiltern in Abgasanlagen von Verbrennungsmotoren, insbesondere von Dieselmotoren in Fahrzeugen.

Im Hinblick auf die steigenden Anforderungen an Umwelt- und Klimaverträglichkeit werden heutzutage immer mehr Fahrzeuge, die insbesondere mit Dieselmotoren betrieben werden, mit Partikelfiltern ausgerüstet, die üblicher Weise in der Abgasanlage hinter dem Katalysator angeordnet werden, um unvollständig verbrannten Kraftstoff in Form von Ruß und Rußagglomeraten aus dem Abgas herauszufiltern. Naturgemäß setzt sich ein derartiger Partikelfilter im Laufe des Betriebs zu, da er durch die zurückgehaltenen Rußpartikel mehr und mehr verstopft wird. Daher ist von Zeit zu Zeit eine Regeneration des Partikelfilters erforderlich.

Die Regeneration des Partikelfilters erfolgt üblicher Weise bei Fahrzeugen entweder dadurch, dass der Motor mit erhöhter Last betrieben wird, was zu einer Erhöhung der Abgastemperatur im Partikelfilter führt. Diese Erhöhung der Abgastemperatur führt dazu, dass die zurückgehaltenen Rußpartikel nachträglich im Rußpartikelfilter verbrannt werden, wodurch der Partikelfilter wieder frei wird. Eine derartige passive Regeneration erfolgt bei Fahrzeugmotoren beispielsweise bei Autobahnfahrten mit hoher Geschwindigkeit.

Wird ein Fahrzeug Jedoch hauptsächlich nur innerstädtisch oder über kurze Strecken auf Landstraßen bewegt, so dass es über längere Zeit nicht zu einer passiven Regeneration des Partikelfilters kommt, so muss eine aktive Regeneration durchgeführt werden, die dann erfolgt, wenn eine entsprechende Sensorik, beispielsweise im Drucksensor vor und hinter dem Partikelfilter feststellt, dass der Durchlass durch den Filter zu gering wird, dass also der Filter regeneriert werden muss.

Stellt also die Motorsteuerung fest, dass eine aktive Regeneration durchzuführen ist, so wird beispielsweise dazu der Kraftstoffeinspritzzeitpunkt nach spät verstellt, was auch zu einer erhöhten Abgastemperatur im Partikelfilter führt, da der Kraftstoff in diesem Fall auch noch in der Abgasanlage verbrannt wird. Auch diese Erhöhung der Abgastemperatur führt zu einem Verbrennen der zurückgehaltenen Rußpartikel, also des unvollständig verbrannten Kraftstoffs im Partikelfilter.

Findet beispielsweise aufgrund der Fahrbedingungen immer noch keine Regeneration statt, wird der Fahrer aufgefordert die Werkstatt aufzusuchen. Die Werkstatt kann auf elektronischem Wege das Motorsteuergerät manuell zu einer Regeneration veranlassen.

Dieses Verfahren ist aber nur bis zu einem gewissen Beladungszustand möglich. Ist diese "manuelle" Regeneration nicht mehr möglich, wird in diesem Falle heutzutage üblicher Weise der Teil der Abgasanlage des Fahrzeugs ausgetauscht, der neben dem Partikelfilter auch den Katalysator enthält. Hier bleibt dem Betreiber des Fahrzeugs allenfalls die Wahl zwischen dem Kauf eines fabrikneuen Partikelfilters oder eines werkgereinigten Partikelfilters zusammen mit der entsprechenden Baugruppe der Abgasanlage, was jedoch in beiden Fällen zu erheblichen Kosten für den Fahrzeugbetreiber führt.

Die JP 2004-239072 A beschreibt ein Verfahren und eine Vorrichtung zum Reinigen von Partikelfiltern in ausgebauten Zustand, bei dem ein Partikelfilter von oben durch Düsen mit heißem Wasser besprüht wird, so dass Verbrennungsrückstände wie Asche weggewaschen werden.

Die DE 101 18 864 A1 betrifft ein weiteres Verfahren und eine Vorrichtung zur Reinigung eines Rußpartikelfilters einer Abgasreinigungsvorrichtung, bei dem die Abgasreinigungsvorrichtung zunächst aus dem Kraftfahrzeug ausgebaut werden muss, um sie in eine entsprechende Reinigungsvorrichtung einsetzen zu können. Die Abgasreinigungsvorrichtung wird vertikal mit dem Rußfilter nach unten angeordnet. Von oben wird durch den Abgaseintritt Druckluft von einer Druckgasquelle zugeführt, die durch einen Stutzen austritt. Dann wird durch den unten angeordneten Abgasaustritt Spülmittel von unten zugeführt, das durch den Rußfilterkörper entgegen seiner üblichen Durchströmungsrichtung durchgepumpt wird und durch den Stutzen abfließt. Sobald der Rußfilter genügend gespült wurde, wird die Spülmittelzufuhr abgestellt, und nach Umschaltung des Ventils wird das in der Abgasreinigungsvorrichtung verbliebene Spülmittel mittels Druckluft aus dem Rußfilter und der Abgasreinigungsvorrichtung herausgeblasen.

Die JP 57-163113 A beschreibt ein Verfahren zum Reinigen eines Filters in der Abgasanlage eines Verbrennungsmotors in eingebautem Zustand, bei dem Waschwässer unter Druck über ein Ventil durch eine Düse auf den Filter gesprüht wird.

Die EP 1 181 966 A1 betrifft ein Verfahren und eine Vorrichtung zum Reinigen von Filtern in eingebautem Zustand, bei dem Waschwasser beispielsweise von der Scheibenwaschanlage über eine Düse während des Betriebs des Motors in einen Abgasstrom in der Leitung eingeleitet und mit diesem durch den Filter transportiert wird.

Davon ausgehend liegt der Erfindung die Aufgabe zugrunde, ein werkstattgerechtes Verfahren zur Reinigung von Partikelfilter in Abgasanlagen von Verbrennungsmotoren, insbesondere von Dieselmotoren, in Fahrzeugen bereitzustellen, das es ermöglicht, einen Partikelfilter auf einfache Weise kostengünstig zu reinigen, ohne dass es des Ausbaus des Partikelfilters bedarf.

Diese Aufgabe wird erfindungsgemäß durch das Verfahren nach Anspruch 1 gelöst, das sich besonders vorteilhaft unter Verwendung einer Vorrichtung gemäß Anspruch 10 durchführen lässt. Vorteilhafte Ausgestaltungen und Weiterbildungen der Erfindung sind in den entsprechenden Unteransprüchen beschrieben.

Es wird also zur Reinigung von Partikelfiltern in Abgasanlagen von Verbrennungsmotoren eine nicht brennbare, aschefreie Reinigungsflüssigkeit mittels einer Spritzdüse unter hohem Druck in solcher Menge durch eine beim Betrieb des Verbrennungsmotors vom Abgas durchströmte Fläche des Partikelfilters in diesen gespritzt, dass das Innere des Partikelfilters im Wesentlichen vollständig durchnässt wird. Auf diese Weise lassen sich im Partikelfilter die darin zurückgehaltenen Partikel, also insbesondere Ruß, von den Wänden des Partikelfilters lösen, so dass diese dann aus dem Partikelfilter gemeinsam mit der Reinigungsflüssigkeit entfernt werden können.

Da sich das erfindungsgemäße Verfahren insbesondere auch dann durchführen lässt, wenn der Partikelfilter sich in der Abgasanlage des Kraftfahrzeugs befindet, also nicht ausgebaut zu werden braucht, ergibt sich ein kostensparendes, werkstattgerechtes Verfahren, das ohne großen Aufwand durchgeführt werden kann.

Zweckmäßiger Weise wird dabei die Reinigungsflüssigkeit mit einem Druck von 5 bis 12, insbesondere von 6 bis 8 bar eingespritzt. Hierdurch wird erreicht, dass die Reinigungsflüssigkeit auch bei Partikelfiltern wirksam in diese eingespritzt werden kann, wenn diese stark zugesetzt sind, so dass es zu einer zügigen Reinigung kommt.

Um eine vollständige Durchnässung des Inneren des Partikelfilters zu erreichen, ist es zweckmäßig, wenn die Menge der einzuspritzenden Reinigungsflüssigkeit etwa dem halben Volumen des Partikelfilters (25) entspricht.

Um die Wirksamkeit der Reinigung eines Partikelfilters weiter zu erhöhen, ist es vorteilhafter Weise vorgesehen, dass die Reinigungsflüssigkeit in zwei, drei oder mehr Portionen aufeinander folgend eingespritzt wird, wobei die Zeitdauer zwischen den einzelnen Einspritzvorgängen 1 bis 10 Minuten, vorzugsweise 3 bis 7 Minuten, insbesondere 5 Minuten beträgt. Durch die erfindungsgemäß vorgesehene Einwirkzeit für die Reinigungsflüssigkeit wird die Reinigungseffektivität deutlich verbessert.

Eine weitere Ausgestaltung der Erfindung zeichnet sich dadurch aus, dass die Reinigungsflüssigkeit in den 10°C bis 100°C, vorzugsweise 40°C bis 70°C warmen Partikelfilter eingespritzt wird. Hierdurch lassen sich effektive Reinigungsergebnisse auch bei relativ kurzer Einwirkzeit erreichen.

Bei einer anderen vorteilhaften Weiterbildung der Erfindung ist vorgesehen, dass nach dem Einspritzen der Reinigungsflüssigkeit eine aschefreie, nicht brennbare Spülflüssigkeit in den Partikelfilter gespritzt wird, wobei die Spülflüssigkeit mit dem gleichen Druck eingespritzt wird, wie die Reinigungsflüssigkeit. Durch das anschließende Spülen des Partikelfilters mit einer Spülflüssigkeit, die unter hohem Druck eingespritzt wird, lässt sich die mit Ruß belastete Reinigungsflüssigkeit bereits weitgehend in der Werkstatt aus dem Filter entfernen.

Wenn ein Spülvorgang durchgeführt wird, so ist es zweckmäßig, wenn die Spülflüssigkeit nach einer Wartezeit nach Beendigung des Einspritzens der Reinigungsflüssigkeit erfolgt, die gleich wie oder länger als die Zeitdauer zwischen den einzelnen Einspritzvorgängen für Reinigungsflüssigkeit ist, um die Reinigungsflüssigkeit zu seiner vollen Wirkung kommen zu lassen.

Als Reinigungsflüssigkeiten eignen sich insbesondere wässrige, alkalische Flüssigkeiten, die nicht brennbar sind und die sich rückstandsfrei aus dem Partikelfilter entfernen lassen oder daraus verdampfen können.

Zur besonders einfachen Durchführung des erfindungsgemäßen Verfahrens ist eine Vorrichtung mit einem die in den zu reinigenden Partikelfilter einzuspritzende Flüssigkeit unter Druck enthaltenden Behälter, einem Auslassventil und einer über einen Schlauch mit dem Auslassventil verbindbaren Spritzdüse, die in einen vor oder hinter dem Partikelfilter befindlichen Raum in der Abgasanlage einführbar ist. Mit einer derartigen Vorrichtung lassen sich im eingebauten Zustand des Partikelfilters die Räume davor oder dahinter zur Reinigung desselben gut erreichten.

Eine besonders vorteilhafte Ausgestaltung der Vorrichtung zeichnet sich dadurch aus, dass die Spritzdüse als an seinem freien Ende geschlossenes Rohr mit einer Mehrzahl von Düsenöffnungen in der Umfangswand des Rohrs ausgebildet ist, wobei die Düsenöffnungen im Wesentlichen in Längsrichtung des Rohrs ausgerichtet sind, so dass die aus den Düsenöffnungen austretenden Strahle im Wesentlichen parallel sind und/oder in einer Ebene liegen.

### Figurenbeschreibung

Die Erfindung wird im Folgenden anhand der Zeichnung näher erläutert. Es zeigen:
Figur 1: eine schematische vereinfachte Darstellung einer Vorrichtung zur Reinigung von Partikelfiltern in Abgasanlagen,
Figur 2: eine vereinfachte schematische Darstellung des Teils einer Abgasanlage eines Verbrennungsmotors, der einen Partikelfilter enthält, und
Figur 3: der in Figur 2 gezeigte Teil einer Abgasanlage während der erfindungsgemäßen Reinigung des Partikelfilters.

In den verschiedenen Figuren der Zeichnung sind einander entsprechende Bauteile mit gleichen Bezugszeichen versehen.

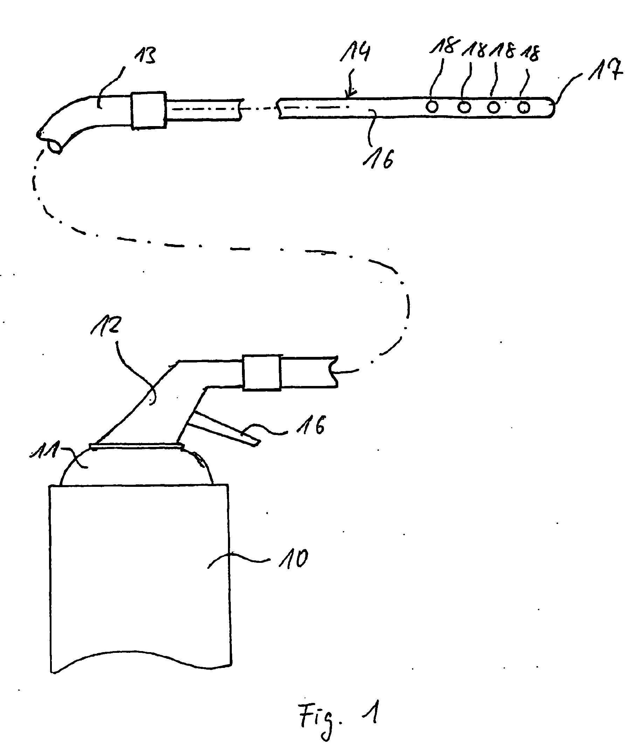

Wie in Figur 1 dargestellt ist, weist die Vorrichtung zur Reinigung eines in einer Abgasanlage eines im Fahrzeug befindlichen Partikelfilters einen Behälter 10 auf, der die in den zu reinigenden Partikelfilter einzuspritzende Flüssigkeit aufnimmt. Der Behälter 10, der als Druckbehälter ausgebildet ist, weist entweder einen integrierten Druckspeicher auf, oder kann in nicht näher dargestellter Weise an eine Druckluftanlage angeschlossen werden, um die Flüssigkeit mit hohem Druck aus dem Behälter 10 fördern zu können. Zum Ausgeben der Reinigungsflüssigkeit aus dem unter Druck stehenden Behälter 10 ist ein Auslassventil 11 vorgesehen, dessen Auslassseite über ein Anschlußstück 12 mit einem Ende eines Schlauchs, insbesondere eines Druckschlauchs 13, verbunden ist, an dessen anderem Ende eine vorzugsweise lanzenförmige Spritzdüse 14 angebracht ist. Das Auslassventil 11 lässt sich über einen im Anschlussstück 12 vorgesehenen Betätigungshebel 15 öffnen, um Reinigungsflüssigkeit dosiert und gezielt ausgeben zu können.

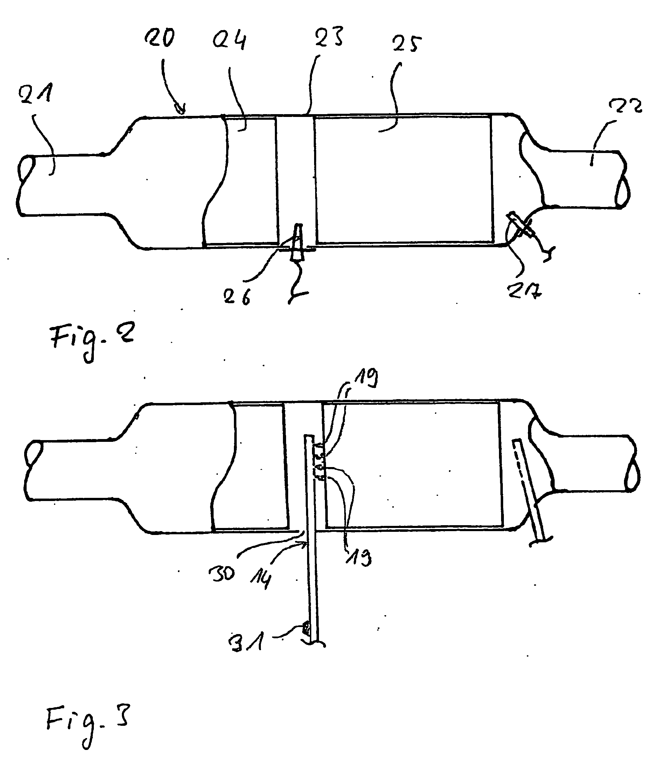

Die Spritzdüse 14 besteht zweckmäßiger Weise aus einem Rohr 16, das an seinem freien Ende 17 druckdicht verschlossen ist und das benachbart zu seinem freien Ende 17 eine Mehrzahl von Düsenöffnungen 18 aufweist, die im Wesentlichen entlang einer zur Achse des Rohres parallelen Mantellinie desselben ausgerichtet sind, so dass die aus den einzelnen Düsenöffnungen 18 austretenden Flüssigkeitsstrahlen 19 (siehe Figur 3) im Wesentlichen parallel zueinander sind.

Obwohl in der Zeichnung die lanzenförmige Spritzdüse als gerades Rohr dargestellt ist, mit dem eine gute Reinigung von Partikelfiltern in verschiedensten Einbausituationen möglich ist, ist es auch denkbar, für spezielle Abgasanlagen Spritzdüsen vorzusehen, die gebogen oder gekröpft sind, wobei das die Düsenöffnungen 18 tragende freie Ende des Düsenrohrs 16, vorzugsweise gerade bleibt. Es ist aber auch denkbar, das Düsenrohr 16 im Bereich der Austrittsdüsen 18 gekrümmt auszubilden, so dass die austretenden

Strahlen divergent oder konvergent zueinander verlaufen, oder weiterhin parallel, aber nicht mehr in einer Ebene liegen. Die Krümmung kann auch so liegen, dass die einzelnen Strahlen auf einen sich verjüngenden oder divergierenden Kegelmantel liegen.

Wie in Figur 2 schematisch dargestellt ist, umfasst ein Auspuff- oder Abgasrohr 20 eine Auspuff- oder Abgasanlage eines Verbrennungsmotors in einem Fahrzeug, einen mit einem Abgasauslass eines Verbrennungsmotors (nicht dargestellt) verbunden Einlassabschnitt 21, einen zur Umwelt führenden Auslassabschnitt 22 und einen dazwischen liegenden zylindrischen Gehäuseabschnitt 23, der gegenüber den Ein- und Auslassabschnitten 21 und 22 einen deutlich größeren Querschnitt aufweist. In diesem Gehäuseabschnitt 23 sind bei herkömmlichen Auspuffanlagen üblicher Weise einlassseitig ein Katalysator zum Umwandeln von Kohlenmonoxid und Stickoxiden in Kohlendioxid bzw. Stickstoff, und ein Partikelfilter 25 angeordnet, der, wie eingangs bereits erläutert, unvollständig verbrannte Kraftstoffbestandteile, also Ruß, aus dem in die Umwelt abzugebenden Abgas herausfiltert.

Um den Verbrennungsmotor, insbesondere Dieselmotor des Kraftfahrzeugs so zu steuern, dass die umwelt- und klimaschädlichen Abgasbestandteile möglichst minimiert werden, sind an dem Gehäuseabschnitt 23 verschiedene Sensoren angebracht, die durch entsprechende Öffnungen in der Gehäusewandung hindurchgeführt sind. In der Figur 2 sind der Einfachheit halber nur zwei Drucksensoren 26, 27 dargestellt, die stromaufwärts bzw. stromabwärts des Partikelfilters 25 angeordnet sind, um aufgrund der ermittelten Druckdifferenzen den Beladungszustand des Partikelfilters 25 erfassen zu können.

Um einen in der Abgasanlage befindlichen Partikelfilter 25 mittels des erfindungsgemäßen Verfahrens zu reinigen, wird vorzugsweise zunächst eine in den Innenraum des Gehäuses 23 vor dem zu reinigenden Partikelfilter 25 führende Öffnung 30 freigelegt. Im dargestellten Beispiel wird die für den Drucksensor 26 vorgesehene Öffnung durch Demontage des Drucksensors 26 freigegeben. Es kann Jedoch auch jede andere geeignete Öffnung, die in diesem Gehäusebereich vorhanden ist oder sein sollte für die Durchführung des erfindungsgemäßen Verfahrens genutzt werden. Sobald die Öffnung 30 im Gehäuse 23 offen ist, wird die lanzenförmige Spritzdüse 14 des Gehäuses 23 so eingeführt, dass die Düsenöffnungen der elnlassseitigen Stirnfläche des Partikelfilters gegenüberliegen. Um dabei die Ausrichtung der Düsenöffnungen zum Partikelfilter hin zu vereinfachen, kann eine entsprechende Markierung 31 am Rohr der Spritzdüse 14 angebracht sein, wie dies in Figur 3 angedeutet ist.

Ist je nach Bauart der Abgasanlage der Raum vor dem Partikelfilter nicht durch einfache Demontage von Sensoren oder dergleichen zugänglich, so kann auch ein entsprechender Sensor, der in den in Strömungsrichtung gesehen hinter dem Partikelfilter 25 gelegenen Raum ragt, ausgebaut werden, um dann dort die Spritzdüse 14 einzuführen, wie dies in Figur 3 dargestellt ist.

Nach dem Einführen der Spritzdüse wird durch Betätigen des Hebels 16 das Auslassventil 11 des Behälters 10 geöffnet, so dass die Reinigungsflüssigkeit mit einem Druck von 5 bis 12 bar, insbesondere von 6 bis 8 bar von der Einlassseite her in den Partikelfilter eingespritzt werden kann. Hierbei wird die Spritzdüse mit ihrem vorderen Enden so bewegt, dass nach Möglichkeit die gesamte einlassseitige Stirnfläche des Partikelfilters 20 mit Reinigungsflüssigkeit bespritzt wird, um zu erreichen, dass das gesamte Innere des Partikelfilters im Wesentlichen vollständig durchnässt wird.

Bei der Durchführung des erfindungsgemäßen Verfahrens kann das Einspritzen der Reinigungsflüssigkeit in den Partikelfilter 25 so erfolgen, dass die gesamte einzuspritzende Menge an Reinigungsflüssigkeit, die vorzugsweise dem halben Volumen des Partikelfilters 25 entspricht, kontinuierlich hintereinander eingespritzt wird.

Es ist aber auch denkbar, das Einspritzen der Reinigungsflüssigkeit in den Partikelfilter 25 in zwei, drei oder vier Durchgängen durchzuführen, wobei zwischen den einzelnen Einspritzvorgängen Wartezeiten eingehalten werden, deren Zeitdauer im Bereich zwischen 1 bis 10 Minuten, vorzugsweise zwischen 3 und 7 Minuten, insbesondere 5 Minuten beträgt. Hierdurch lässt es sich erreichen, dass die Reinigungsflüssigkeit leichter tiefer in den Partikelfilter 25 eindringt, was insbesondere bei sehr stark zugesetzten Partikelfiltern 25 von Vorteil ist.

Ferner ist es möglich, wenn sowohl der Raum vor als auch der Raum hinter dem Partikelfilter 25 zugänglich ist, einen Teil der Reinigungsflüssigkeit von der Einlassselte des Partikelfilters 25 her und einen anderen Teil von der Auslassseite her in diesen einzuspritzen. Wird hierbei die Reinigungsflüssigkeit mit mehr als zwei Einspritzvorgängen eingespritzt, so lässt sich zur Verkürzung der Wartezeit die Reinigungsflüssigkeit abwechselnd zunächst von der Auslassseite und dann von der Einlassseite her einspritzen. Hierdurch lässt sich die vollständige Durchnässung des Inneren des Partikelfilters weiter verbessern.

Sobald die gesamte für den Reinigungsvorgang vorgesehene Reinigungsflüssigkeit eingespritzt wurde, kann entweder das Gehäuse wieder durch Einsetzen der entsprechenden Sensoren verschlossen werden, so dass die Reinigungsflüssigkeit beim folgenden Betrieb des Verbrennungsmotors in der Werkstatt aus dem Partikelfilter herausgedrückt wird, und es wird erfindungsgemäß ein Spülvorgang durchgeführt, bei dem vorzugsweise von der Einlassseite her eine aschefreie, nicht brennbare Spülflüssigkeit in den Partikelfilter gespritzt wird, um so bereits vor der Inbetriebnahme des Verbrennungsmotors zumindest einen Teil der Reinigungsflüssigkeit und damit darin befindliche Rußpartikel aus dem Partikelfilter zu entfernen. Hierbei erfolgt das Einspritzen der Spülflüssigkeit zweckmäßiger Weise mit dem gleichen Druck, wie das Einspritzen der Reinigungsflüssigkeit, jedoch mit reduzierter Menge.

Nach dem Reinigen des Partikelfilters wird zweckmäßiger Weise eine aktive Regenerierung des Partikelfilters durchgeführt, um auch solche Rußpartikel daraus zu entfernen, die möglicher Weise nach der Reinigung noch im Partikelfilter verblieben sind.

Das erfindungsgemäße Verfahren lässt sich auf einfache Weise in jeder Kraftfahrzeugwerkstatt durchführen, ohne dass es zu aufwendigen Aus- und Umbauarbeiten an der Auspuff- oder Abgasanlage eines Fahrzeugs kommt. Da auf diese Weise die Lebensdauer der Auspuffanlage wesentlich verlängert werden kann, hat dies für den Fahrzeugbetreiber erhebliche Zeit- und Kostenvortelle.

## Patentansprüche

1. Verfahren zur Reinigung von in der Abgasanlage von Verbrennungsmotoren, insbesondere von Dieselmotoren in Fahrzeugen befindlichen Partikelfiltern, bei dem
- eine in einen Innenraum vor oder hinter dem zu reinigenden Partikelfilter (25) führende Öffnung (30) freigelegt wird,
- eine Spritzdüse (14) in den Innenraum so eingeführt wird, dass deren Düsenöffnungen (18) einer beim Betrieb des Verbrennungsmotors vom Abgas durchströmten Fläche des Partikelfilters (25) gegenüberliegen, und
- eine nicht brennbare, aschefreie Reinigungsflüssigkeit mittels der Spritzdüse (14) mit einem Druck von 5 bis 12 bar durch die beim Betrieb des Verbrennungsmotors vom Abgas durchströmte Fläche des Partikelfilters (25) in diesen gespritzt wird, wobei die Menge der einzuspritzenden Reinigungsflüssigkeit etwa dem halben Volumen des Partikelfilters (25) entspricht, so dass das Innere des Partikelfilters vollständig durchnässt wird.

2. Verfahren nach Anspruch 1, **dadurch gekennzeichnet, dass** die Reinigungsflüssigkeit mit einem Druck von 6 bis 8 bar eingespritzt wird.

3. Verfahren nach Anspruch 1 oder 2, **dadurch gekennzeichnet, dass** die Reinigungsflüssigkeit in zwei, drei oder mehr Portionen aufeinander folgend eingespritzt wird.

4. Verfahren nach Anspruch 3, **dadurch gekennzeichnet, dass** die Zeitdauer zwischen den einzelnen Einspritzvorgängen 1 bis 10 Minuten, vorzugsweise 3 bis 7 Minuten, insbesondere 5 Minuten beträgt.

5. Verfahren nach einem der vorstehenden Ansprüche, **dadurch gekennzeichnet, dass** die Reinigungsflüssigkeit in den 10° C bis 100° C, vorzugsweise 40° C bis 70° C warmen Partikelfilter eingespritzt wird.

6. Verfahren nach einem der vorstehenden Ansprüche, **dadurch gekennzeichnet, dass** nach dem Einspritzen der Reinigungsflüssigkeit eine aschefreie, nicht brennbare Spülflüssigkeit in den Partikelfilter gespritzt wird.

7. Verfahren nach Anspruch 6, **dadurch gekennzeichnet, dass** die Spülflüssigkeit mit dem gleichen Druck eingespritzt wird, wie die Reinigungsflüssigkeit.

8. Verfahren nach Anspruch 6 oder 7, **dadurch gekennzeichnet, dass** die Spülflüssigkeit nach einer Wartezeit nach Beendigung des Einspritzens der Reinigungsflüssigkeit erfolgt, die gleich wie oder länger als die Zeitdauer zwischen den einzelnen Einspritzvorgängen für Reinigungsflüssigkeit ist.

9. Verfahren nach einem der vorstehenden Ansprüche, **dadurch gekennzeichnet, dass** die Reinigungsflüssigkeit eine wässrige, alkalische Flüssigkeit ist.

10. Verwendung einer Vorrichtung mit:
- einem die in den zu reinigenden Partikelfilter (25) einzuspritzende Flüssigkeit unter Druck enthaltenden Behälter (10),
- einem Auslassventil (11), und
- einer über einen Schlauch (13) mit dem Auslassventil verbindbaren Spritzdüse (14),
die in einen vor oder hinter dem Partikelfilter (25) befindlichen Raum in der Abgasanlage einführbar ist, zur Durchführung des Verfahrens nach einem der vorstehenden Ansprüche.

11. Verwendung nach Anspruch 10, **dadurch gekennzeichnet, dass** die Spritzdüse (14) als an seinem freien Ende (17) geschlossenes Rohr (16) mit einer Mehrzahl von Düsenöffnungen (18) in der Umfangswand des Rohrs (16) ausgebildet ist, wobei die Düsenöffnungen (18) im Wesentlichen in Längsrichtung des Rohrs (16) ausgerichtet sind, so dass die aus den Düsenöffnungen austretenden Strahle im Wesentlichen parallel sind und/oder in einer Ebene liegen.

## Claims

1. A method for cleaning particle filters being arranged in exhaust gas systems of combustion engines, in particular diesel engines in vehicles, in which
- an opening (30) leading into the interior of the housing (23) before or after the particle filter (25) to be cleaned is exposed,
- a spray nozzle (14) is inserted into the interior of the housing (23) in such a way that the nozzle openings (18) lie opposite an end face of the particle filter through which exhaust gas flows during the operation of the combustion engine; and
- a noncombustible, ash-free cleaning fluid is sprayed into the particle filter (25) at a pressure of from 5 to 12 bar by means of the spray nozzle (14), across the area of said filter through which the exhaust gas flows during the operation of the combustion engine, in a quantity corresponding approximately to half the volume of the particle filter (25) such that the interior of the particle filter is substantially completely soaked.

2. The method as claimed in claim 1, wherein the cleaning fluid is injected at a pressure of from 6 to 8 bar.

3. The method as claimed in claim 1 or 2, wherein the cleaning fluid is injected successively in two, three or more portions.

4. The method as claimed in claim 3, wherein the time between the individual injection operations is from 1 to 10 minutes, preferably from 3 to 7 minutes, in particular 5 minutes.

5. The method as claimed in one of the preceding claims, wherein the cleaning fluid is injected into the particle filter when the latter is at a temperature of from 10°C to 100°C, preferably of from 40°C to 70°C.

6. The method as claimed in one of the preceding claims, wherein an ash-free, noncombustible flushing fluid is sprayed into the particle filter after the injection of the cleaning fluid.

7. The method as claimed in claim 6, wherein the flushing fluid is injected at the same pressure as the cleaning fluid.

8. The method as claimed in claim 6 or 7, wherein the flushing fluid is injected after a waiting time following the ending of injection of the cleaning fluid which is equal to or longer than the time between the individual injection operations for cleaning fluid.

9. The method as claimed in one of the preceding claims, wherein the cleaning fluid is an aqueous alkaline fluid.

10. Use of an apparatus having:
- a container (10) containing, under pressure, the fluid to be injected into the particle filter (25) to be cleaned,
- an outlet valve (11), and
- a spray nozzle (14), which can be connected to the outlet valve via a hose (13) and can be inserted into a space in the exhaust gas system situated before or after the particle filter (25)
for carrying out the method according to one of the preceding claims.

11. Use as claimed in claim 10, wherein the spray nozzle (14) is designed as a tube (16) which is closed at its free end (17) and has a plurality of nozzle openings (18) in the circumferential wall of the tube (16), the nozzle openings (18) being aligned substantially in the longitudinal direction of the tube (16), with the result that the jets emerging from the nozzle openings are substantially parallel and/or are in one plane.

## Revendications

1. Procédé pour le nettoyage de filtres à particules dans des systèmes de gaz d'échappement de moteurs à combustion interne, en particulier de moteurs diesel dans des véhicules, dans lequel
- une ouverture (30) qui mène dans un volume intérieur devant ou derrière le filtre à particules (25) à nettoyer est dégagée,
- une buse d'injection (14) est introduite dans le volume intérieur de telle façon que ses ouvertures de buse (18) sont à l'opposé d'une surface du filtre à particules (25) qui est traversée par les gaz d'échappement lors du fonctionnement du moteur à combustion interne, et
- un liquide de nettoyage non combustible et exempt de cendres est injecté dans le filtre à particules au moyen de la buse d'injection (14) sous une pression de 5 à 12 bars à travers la surface du filtre à particules (25) qui est traversée par les gaz d'échappement lors du fonctionnement du moteur à combustion interne, de sorte que la quantité de liquide de nettoyage à injecter correspond environ à la moitié du volume du filtre à particules (25), de sorte que l'intérieur du filtre à particules est entièrement mouillé.

2. Procédé selon la revendication 1, **caractérisé en ce que** le liquide de nettoyage est injecté avec une pression de 6 à 8 bars.

3. Procédé selon la revendication 1 ou 2, **caractérisé en ce que** le liquide de nettoyage est injecté successivement dans deux, trois portions ou plus.

4. Procédé selon la revendication 3, **caractérisé en ce que** la durée entre les opérations d'injection individuelles s'élève de 1 à 10 minutes, de préférence trois à sept minutes, en particulier cinq minutes.

5. Procédé selon l'une des revendications précédentes, **caractérisé en ce que** le liquide de nettoyage est injecté dans le filtre à particules chaud de 10° C à 100° C, de préférence 40° C à 70° C.

6. Procédé selon l'une des revendications précédentes, **caractérisé en ce que**, après l'injection du liquide de nettoyage, on injecte dans le filtre à particules un liquide de rinçage non combustible, exempt de cendres.

7. Procédé selon la revendication 6, **caractérisé en ce que** le liquide de rinçage est injecté à la même pression que le liquide de nettoyage.

8. Procédé selon la revendication 6 ou 7, **caractérisé en ce que** le liquide de rinçage est injecté, après terminaison de l'injection du liquide de nettoyage, après un temps d'attente qui est égal ou supérieur à la durée entre les opérations d'injection individuelles pour le liquide de nettoyage.

9. Procédé selon l'une des revendications précédentes, **caractérisé en ce que** le liquide de nettoyage est un liquide alcalin aqueux.

10. Utilisation d'un appareil comprenant :
- un réservoir (10) qui contient le liquide à injecter dans le filtre à particules (25) à nettoyer, sous pression,
- une valve de sortie (11), et
- une buse d'injection (14) susceptible d'être reliée à la valve de sortie au moyen d'un tuyau flexible (13), qui peut être introduite dans le système de gaz échappement dans un volume qui se trouve devant ou derrière le filtre à particules (25),
pour la mise en oeuvre du procédé selon l'une des revendications précédentes.

11. Utilisation selon la revendication 10, **caractérisé en ce que** la buse d'injection (14) est réalisée sous la forme d'un tube (16) fermé à son extrémité libre (17) avec une pluralité d'ouvertures de buses (18) dans la paroi périphérique du tube (16), dans lequel les ouvertures de buses (18) sont orientées sensiblement en direction longitudinale du tube (16), de telle manière que les jets sortant des ouvertures de buse sont sensiblement parallèles et/ou sont situés dans un plan.
